(19) Europäisches Patentamt
European Patent Office
Office européen des brevets

(11) **EP 2 508 498 A1**

(12) **EUROPÄISCHE PATENTANMELDUNG**

(43) Veröffentlichungstag:
    **10.10.2012 Patentblatt 2012/41**

(51) Int Cl.:
    ***C06D 5/04*** [(2006.01)]   ***C01B 15/01*** [(2006.01)]

(21) Anmeldenummer: **11002992.3**

(22) Anmeldetag: **09.04.2011**

(84) Benannte Vertragsstaaten:
    **AL AT BE BG CH CY CZ DE DK EE ES FI FR GB
    GR HR HU IE IS IT LI LT LU LV MC MK MT NL NO
    PL PT RO RS SE SI SK SM TR**
    Benannte Erstreckungsstaaten:
    **BA ME**

(71) Anmelder:
    • **Braun, Eckhard
      63110 Rodgau (DE)**

• **Singer, Andreas
  4030 Linz (AT)**

(72) Erfinder:
    • **Braun, Eckhard
      63110 Rodgau (DE)**
    • **Singer, Andreas
      4030 Linz (AT)**

(54) **Solarer Treibstoff auf der Basis des Monergols Wasserstoffperoxid**

(57)    Herstellung eines Monergols auf der Basis von Wasserstoffperoxid, wobei die zur Herstellung notwendige Energie durch Solarenergie gewonnen wird, und damit eine lokale Speicherung oder den Transport der konvertierten Sonnenenergie in Gebiete mit eingeschränkter Sonneneinstrahlung erlaubt. Die Treibgase des Monergols werden nach der katalytischen Zersetzung beim Endverbraucher zum Antrieb einer Turbine, eines Stirlingmotors, eines konventionellen Gasmotors oder Fahrzeugantriebes verwendet. Beim Betrieb eines Wärmetauschers oder Brauchwasseraufbereiters wird durch eine vorherige Beimengung von Wasser zum Monergol die Reaktionstemperatur gesenkt.

EP 2 508 498 A1

**Beschreibung**

Die Erfindung bezieht sich auf die großtechnische Konvertierung von Solarenergie in das Monergol Wasserstoffperoxid $H_2O_2$ als Energieträger, das zur lokalen Speicherung oder für den Transport der gesammelten Sonnenenergie in Gebiete mit eingeschränkter Sonneneinstrahlung bestimmt ist, und beim Endverbraucher nach der katalytischen Zersetzung zum Antrieb einer Turbine, eines Stirlingmotors, eines konventionellen Gasmotors oder eines Fahrzeugantriebes verwendet wird.

Hintergrund der Erfindung

Da elektrische Energie nicht in der notwendigen Größenordnung speicherbar ist, muss in elektrischen Versorgungssystemen die Erzeugung und der Verbrauch lokal ausbalanciert werden. Die besonders interessante Solarenergiedichte ist vorzugsweise in Wüstengebieten konzentriert, die eigentlich nicht bewohnbar sind und wo ausserdem wenig Energie benötigt wird. Dieser Energieüberschuss kann genutzt und in die Regionen transportiert werden, wo der Bedarf vorhanden ist.

Als Energiespeicher kommen Kurzzeitsysteme, wie stationäre Batterien, inertes Druckgas (CAES compressed air energy storage), Pumpspeicher (Ausnützung der potentiellen Energie von Wassermassen) oder Langzeitsysteme, wie Wasserstoff, synthetisches Erdgas, unter hohem Druck in den Untergrund gepresste Luft, in Frage. Immerhin wird schon seit langer Zeit auch die Sonnenenergie dazu genutzt, um aus Biomasse bestimmte Treibstoffe zu erzeugen.

Die Wüsten der Erde empfangen in 6 Stunden mehr Energie von der Sonne als die Menschheit in einem Jahr verbraucht (Dr. Gerhard Knies - Desertec Foundation). Die Desertec Foundation ist seit Juni 2009 aktiv, um deutsche/ europäische Haushalte künftig mit Solarstrom aus Afrika zu versorgen. Dabei wird mit Hilfe eines Hochspannungs-Gleichstromnetzes die Energie über 3000 km übertragen.

Das "Highview CryoEnergy System (CES)" nützt Solarenergie, um Luft mit Hilfe solarbetriebener Kältemaschinen unter den Gefrierpunkt zu kühlen. Dieses Luftkryogen wird in Isolierbehältern drucklos aufbewahrt und kann transportiert werden. Bei Bedarf wird die Luft über Wärmetauscher, die der Umgebung Wärmeenergie entziehen, verdampft und einer Turbine zugeführt.

Die Volumenexpansion beträgt um die 700%, der Wirkungsgrad um die 50% (GIZMAG Artikel, Ben Coxworth March 16, 2011).

Das "SolarFuelKonzept" speichert Wind- und Solarenergie als synthetisches Erdgas. Sonnenenergie wird mit Hilfe von Fotovoltaikmodulen zu Strom konvertiert. Wasser und Kohlenstoffdioxid, dass aus unabhängigen Industriebetrieben stammt, wird dem System zugeführt. Im Elektrolyse-, Absorptions- und elektrochemischen Desorptionsmodul wird Sauerstoff getrennt, und der reduzierte Wasserstoff und Kohlendioxid im nachgeschalteten Synthesemodul in ein energiereiches Erdgassubstitut (z.B. Methan) hydriert (Solar Fuel Konzept, Stephan Rieke, SolarFuel GmbH, Würzburg 17.6.2010).

Wissenschaftler des amerikanischen Biotechnologie-Konsortiums Joule Unlimited haben mit Hilfe der Gentechnik in den vergangenen Jahren künstlich einen Mikroorganismus (Cyanobakterium) geschaffen, der nach Art der Fotosynthese aus Kohlendioxid und Wasser, unter Einfluss von Sonnenlicht, Diesel und Äthanol produziert. Die Bakterien sind in flachen Modulen untergebracht, ähnlich wie Solarzellen. Sie können mit Hilfe von Sonnenlicht, Abwasser und dem beispielsweise beim Betrieb von Kraftwerken anfallenden Kohlendioxid arbeiten. Eine Fläche in der Größe von 10.000 Quadratmeter liefert jährlich 120.000 Liter Diesel (Kopp exclusive, Ausgabe 10/11).

US Patent application 20090074611 (PHOTOLYTIC GENERATION OF HYDROGEN PEROXIDE) beschreibt eine photolytische Wasserstoffperoxiderzeugung, wobei mit Hilfe eines lichtaktivierten Katalysators Wasser oxidiert wird. Das gasförmige oder flüssige Peroxid wird zur Desinfektion, Dekontamination oder Sterilisation verwendet.

Das neue Biobenzin E10, bestehend aus einer Benzin/Alkohol Mischung, beinhaltet einen Emulgator, um eine gleichmäßige Mischung zu gewährleisten. Bereits nach einem Monat kann eine Entmischung auftreten und der Alkohol setzt sich am Boden ab.

Zusammenfassung der Erfindung

Die Erfindung wird im Hauptanspruch definiert, während die abhängigen Ansprüche weitere Merkmale der Erfindung beschreiben.

Zweck der Erfindung ist es, Solarenergie umweltverträglich als Langzeitspeichersystem zu konservieren und zu transportieren. Die im Patenthintergrund beschriebenen Konzepte benötigen zum Teil Sekundärstoffe wie Kohlenstoffdioxid, kryogene Lagerung der Energieträger und Druckkomprimierung bei gasförmigen Produkten. Systeme, basierend auf einem Mikroorganismus, benötigen große Flächen und große Zeitspannen. Andererseits entstehen bei der Verbrennung der vorgestellten Solartreibstoffe wiederum Kohlendioxid, Stickoxide und andere Schadstoffe, da als Oxidator Luft verwendet werden muss.

Monergole (Einfachtreibstoffe) bezeichnet man als jene Treibstoffe, die nur aus einer einzigen Flüssigkeit bestehen und keinen zusätzlichen Oxidator benötigen.

Das erfindungsgemäße Konzept erzeugt aus Wasser und Solarenergie ein Monergol, das durch eine exotherme katalytische Zersetzung, ohne Zusatz eines Oxidators, Wasserdampf und Sauerstoff erzeugt. Die Heißgastemperatur ist von der Konzentration des Wasserstoffperoxids abhängig. Es ist keine Druckaufbewahrung oder Kühlung notwendig. Die Energiekonvertierung erfolgt unmittelbar. Umweltschäden, hervorgerufen durch Transportunfälle, treten nicht auf, da durch die ausgelöste katalytische Zersetzung (Verunreinigung durch Umwelteinflüsse) nur Wasser und Sauerstoff entstehen. Verschüttetes $H_2O_2$ wird einfach mit Wasser weggespült.

Eine Explosionsneigung von flüssigem $H_2O_2$ konnte nicht bestätigt werden. 98%iges $H_2O_2$ konnte durch mechanischen Schlag oder Gewehrbeschuss ebensowenig zur Detonation gebracht werden wie durch Dynamitzündungen.

Die Gefahren bei tiefen Temperaturen sind nicht so groß wie bei Wasser, da sich $H_2O_2$ beim Gefrieren und weiterer Abkühlung nicht ausdehnt, sondern zusammenzieht und dadurch ein Sprengen der Behälter ausgeschlossen ist. Der Gefrierpunkt von 70%igem Wasserstoffperoxid liegt bei -40°C. Reines Wasserstoffperoxid hat einen Gefrierpunkt von -0.4°C.

Wasserstoffperoxid kann prinzipiell durch drei Verfahren hergestellt werden: Den nassen chemischen Prozess (Ansäuern von Alkalimetallperoxiden), den elektrochemischen Prozess (Elektrolyse von Schwefelsäure in Wasser bei hohen Stromdichten) und durch die organische Autooxidation (Oxidation und Hydrolyse von Anthrachinonderivaten). Die elektrochemische Erzeugung benötigt zwischen 1200 und 1800 kWh pro 100 kg $H_2O_2$ mit 35%iger Reinheit. Alle Prozesse liefern kein reines $H_2O_2$, sondern wässrige Lösungen (typisch 15%iges bis 40%iges $H_2O_2$), die erst nach verschiedenen Verfahren aufkonzentriert werden müssen. Nach einer Reinigung und anschließender Destillation wird eine Konzentration von 50% bis 70% erreicht. Nach einer erneuten Destillation kann theoretisch ein Konzentrationsgrad von 100% erreicht werden.

Da Wasserstoffperoxid keine azeotrope Mischung mit Wasser eingeht, ist das Destillationsverfahren und die fraktionelle Kristallisation (Gefrierkristallisation) hervorragend geeignet.

Aus Sicherheitsgründen begnügt man sich damit, 90%iges $H_2O_2$ herzustellen, obwohl für spezielle Zwecke auch 98%iges $H_2O_2$ verfügbar ist. 100%iges $H_2O_2$ wird außer für spezielle Laboratoriumsuntersuchungen nicht verwendet. In den Handel gelangt $H_2O_2$ gewöhnlich als 30%ige wässrige Lösung.

Die auch in reinstem $H_2O_2$ mit messbarer Geschwindigkeit ablaufende Zersetzungsreaktion wird durch Ionen der Übergangselemente, vor allem durch Mn, Fe, Cu, Co, Ni und durch Silberoder Platinmetall katalysiert. Der katalytische Einfluss von Verunreinigungen kann durch Zusatz komplexbildender Stabilisatoren verringert werden. Als Stabilisatoren dienen Phosphate und Stannate. Die Zersetzungsrate ist jedoch relativ gering. 98%iges $H_2O_2$ zersetzt sich bei Raumtemperatur zu weniger als 1% pro Jahr (Lagerung in einem Aluminiumbehälter). Dieser Prozess ist reversibel, da das entstehende Wasser durch erneute Destillation ausgebracht werden kann. Der entstehende Sauerstoff wird über ein Überdruckventil abgeblasen.

Wasserstoffperoxid wird für die Sterilisation in Wasserbehandlungsanlagen verwendet. Wasserstoffperoxid ist auch eine Basis-Chemikalie, die in der Nahrungsmittel-, Pharma-, Zellstoff-, Textil- und Halbleiter-Industrie unverzichtbar ist. Die wässrigen Lösungen von $H_2O_2$ wirken schwach oxidierend. Eine 90%ige wässrige Lösung hat einen pH Wert von 4.9. Die Korrosionswirkung ist gering.

Der Einsatz als Energieträger in hochprozentiger Form (70% bis 98%) wurde bereits seit Jahrzehnten in der Raketentechnik genutzt, sowohl als Monergol als auch als Diergol in Zusammenarbeit mit anderen Treibstoffen. Wasserstoffperoxid spielte seit 1934 eine wesentliche Rolle als Treibstoff. Auf dieser Zersetzungsreaktion beruhte der Antrieb von Torpedos, U-Booten, Raketenflugzeugen und Hilfsaggregaten, wie Turbopumpen.

Der Walter Antrieb wurde bereits 1930 entwickelt, bei dem Wasserstoffperoxid aus feinen Düsen auf einen Katalysator aus Mangandioxid gesprüht wird. Das dabei entstehende, unter hohem Druck stehende Dampf-Sauerstoff-Gemisch wurde in eine Turbine geleitet und stand damit als Antriebsenergie zur Verfügung.

Die russischen Sojus-Raketen verwendeten bis zum Jahre 2009 82,5%iges $H_2O_2$ für die Turbopumpen.

Das erfindungsgemäße Verfahren konvertiert die Solarenergie in elektrische und, wenn nötig, in thermische Energie (z.B. für Destillationsprozesse), die dazu verwendet wird, großtechnisch das Monergol Wasserstoffperoxid als Energiespeicher (Solartreibstoff) herzustellen.

Das zu verwendende Monergol hat eine Konzentration von 60% bis 98%. Durch die Auswahl der Konzentration bzw. durch eine gezielte Beimengung von Wasser beim Verbraucher kann die Abgastemperatur bzw. Reaktionstemperatur eingestellt werden. Dies ist wichtig beim Einsatz eines Wärmetauschers bzw. Brauchwassererhitzers, wo die zu erwärmende Flüssigkeit nicht sieden soll.

Hochenergetische $H_2O_2$ Konzentrationen liefern ein umweltfreundliches Treibgas. Dieses Gas erzeugt Energie entweder durch eine Entspannung in einer Turbine, den Betrieb eines Stirlingmotors oder den Betrieb eines konventionellen Gasmotors. Die Drehbewegung wird letztendlich durch einen Generator in Strom umgewandelt. Auch Fahrzeugantriebe sind denkbar.

$H_2O_2$ ist eine Flüssigkeit, die sich bei katalytischer oder thermischer Anregung in exothermer Reaktion zu Sauerstoff und Wasserdampf zersetzt.

$H_2O_2$ (flüssig) → $H_2O$ (Gas) + ½ $O_2$ (Gas) (Zersetzungsenergie 98,3 kJ/mol)

Als Katalysator werden neben Permanganate auch metallische oder poröse keramische Stützstrukturen verwendet, die einen galvanischen Metall oder Metalloxidüberzug besitzen (z.B. Silber, Platin, Ruthenium, Blei, Vanadium, Samarium).

Die nachfolgenden Berechnungen basieren auf einer chemischen Gleichgewichtsbedingung und Enthalpiebilanz. Die Berechnungen wurden für einen Gasgenerator mit konstantem Brennraumdruck durchgeführt.

Tabelle 1 zeigt einige Leistungsparameter für das Monergol Wasserstoffperoxid, Methangas, Äthanol und Benzol.

Der Leistungsparameter $1/\Gamma\sqrt{R_0/M \cdot T_c}$

ist ein Maß für den Durchfluss eines Treibstoffes, der notwendig ist, um den Kammerdruck in einem Gasgenerator zu halten. Damit kann die Energiebilanz verschiedener Treibstoffe verglichen werden. Γ beschreibt das Verhältnis der spezifischen Wärme bei konstantem Druck und konstantem Volumen. M ist das Molekulargewicht der Treibgase, $R_0$ die universelle Gaskonstante und $T_c$ die Verbrennungs- bzw. Zersetzungstemperatur. Das stöchiometrische Verhältnis erlaubt eine Abschätzung des notwendigen Luftanteils an der Verbrennung. Die Dichtewerte gelten für 25˚C, bei Methangas wurde die übliche Komprimierung auf 200 bar berücksichtigt.

Tabelle 1: Leistungswerte bei isobarer Verbrennung

| | stöchimetrische Mischung | | $\dfrac{1}{\Gamma}\sqrt{\dfrac{R_0}{M} \cdot T_c}$ | Dichte bei 25˚C |
|---|---|---|---|---|
| | % Brennstoff | % Luft | m/s | g/cm3 |
| **90% H2O2** | 100 | 0 | 939 | 1,3867 |
| **Methangas** | 5,5 | 94,5 | 1268 | 0,1315 bei 200 bar |
| **Äthanol** | 10 | 90 | 1249 | 0,7890 |
| **Benzol** | 7 | 93 | 1268 | 0,8780 |

Bei Verwendung als Gaserzeuger liefert 100% des Monergols $H_2O_2$ mit einer Konzentration von 90% eine Energiemenge pro kg Brennstoff, die vergleichbar ist mit 4% Methan, 5% Benzol und 7,5% Äthanol. Die Werte scheinen gering und sind dadurch erklärbar, da die Vergleichsbrennstoffe als Diergole verwendet werden und Luft zur Verbrennung örtlich beziehen.

Wird die Energiemenge auf das Volumen (Energie pro m3 Treibstoff) bezogen, erhöhen sich die Werte auf 8% Benzol und 13% Äthanol.

Da Methan als komprimiertes Gas vorliegt und eine geringe Dichte aufweist, erhöht sich die volumenspezifische Energiemenge immerhin auf 42%. Berücksichtigt man aber das Bruttogewicht eines Treibstoffbehälters, also das Gewicht inklusiv des druckfesten Tankbehälters, so kann man erkennen, dass Systeme mit komprimierten Brennstoffgasen, wie Methan, ein höheres Transportgewicht bei gleicher Leistung aufweisen.

Dieser Vergleich zeigt, dass das Monergol $H_2O_2$ eine Alternative als Energiespeicher und als Energietransportmittel ist. Zusätzlich, wie aus den Bildern 1 und 2 ersichtlich, erzeugt das Monergol $H_2O_2$ vollkommen unschädliche Abgase. Die Abgaszusammensetzung in Prozent und die Verbrennungstemperaturen sind in Tabelle 2 angegeben. Die hohen Brennraumtemperaturen von Methan, Äthanol und Benzol stellen auch eine Belastung für die Bauteile dar. Triebwerke mit Monergol werden deshalb auch als kalte Triebwerke bezeichnet.

Tabelle 2: Abgaszusammensetzung bei isobarer Verbrennung

| | CO | CO2 | H2O | N2 | NO | O2 | OH | Argon | Tc in ˚C |
|---|---|---|---|---|---|---|---|---|---|
| **90% H2O2** | - | - | 0.5767 | - | - | 0.4233 | - | - | 754 |
| **Methangas** | 0.006 | 0.1458 | 0.1219 | 0.7127 | 0.0008 | 0.0005 | 0.0005 | 0.0117 | 2024 |
| **Äthanol** | 0.0055 | 0.1865 | 0.1161 | 0.6788 | 0.0008 | 0.0006 | 0.0004 | 0.0112 | 1990 |
| **Benzol** | 0.0101 | 0.225 | 0.0475 | 0.7008 | 0.0021 | 0.0022 | 0.0007 | 0.0115 | 2170 |

Die folgenden Bilder geben Aufschluss über die Merkmale der Erfindung.

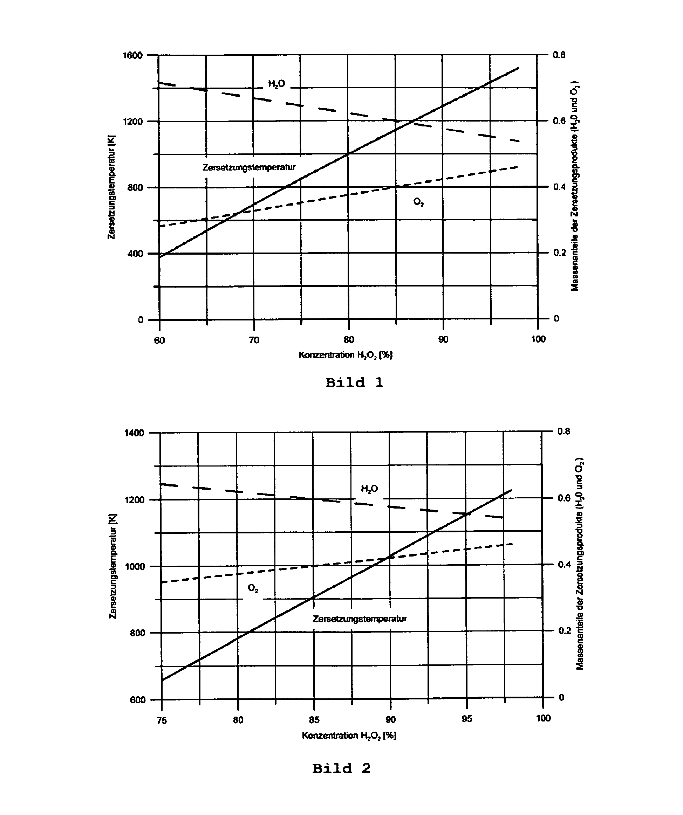

Bild 1 zeigt die theoretische Zersetzungstemperatur und die Abgaszusammensetzung bei chemischer Gleichgewichtsbedingung für einen isochoren Zersetzungsprozess. $H_2O_2$ mit einer Konzentration von 60% liefert teilweise noch Wasseranteile in flüssiger Form. Diese Konzentration ist somit die Untergrenze für die oben beschriebene Anwendung.

Bild 2 zeigt die theoretische Zersetzungstemperatur und die Abgaszusammensetzung bei chemischer Gleichgewichtsbedingung für einen isobaren Zersetzungsprozess. Der Reaktionskammerdruck ist 70 bar.

Bild 3 ist eine schematische Darstellung des erfindungsgemäßen Prozesses. Dies ist eine bevorzugte Ausführungsform der Erfindung, die jedoch ein nicht eingeschränktes Beispiel darstellt.

Detaillierte Beschreibung einer bevorzugten Ausführungsform.

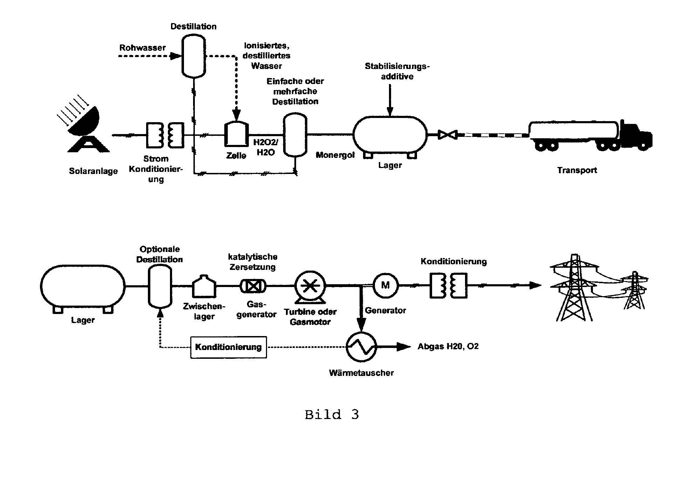

Bild 3 ist eine schematische Darstellung des erfindungsgemäßen Prozesses. Die solare Energieeinstrahlung wird in elektrischen Strom konvertiert, wobei eine konventionelle Fotovoltaikanlage oder ein Isothermiekraftwerk, das generell höhere Wirkungsgrade aufweist, verwendet wird. Der gelieferte Strom wird konditioniert und der Wasserstoffperoxidanlage, der Rohwasser-Destillationsanlage und der Wasserstoffperoxid-Destillationsanlage zugeführt. Die Destillation kann mehrfach durchgeführt werden, je nach gefordertem Konzentrationsgrad. Das entstehende Monergol wird einem Lagertank zugeführt, wobei entsprechende Stabilisierungsadditive zugegeben werden.

Beim Endverbraucher kann optional eine Destillation vorgenommen werden, wobei der Energieinhalt des Monergol erhöht wird.

Theoretisch könnte ein 100%iges hochenergetisches Wasserstoffperoxid erzeugt werden, da Transport und Lagerzeit keine Rolle mehr spielen. Diese Destillationsanlage ist energieautark, da ein Teil der elektrischen Energie oder die Abgaswärme der Turbine, die durch einen Wärmetauscher rückgewonnen wird, dazu genutzt wird, die Vorrichtung zu betreiben.

Nach dem Zwischentank befindet sich der Gasgenerator bzw. die Reaktionskammer, wo das Monergol katalytisch zersetzt wird. Die Volumenexpansion (von flüssig nach gasförmig) beträgt zwischen den 80- bis 5000-fachen Wert, abhängig vom eingestellten Kammerdruck (70 bis 1 bar). Das Abgas treibt eine Turbine oder einen Gasmotor an.

Ein Stromgenerator, der mechanisch oder durch Magnetfelder mit dem rotierenden Element in der Turbine oder des Gasmotors verbunden ist, liefert den Strom. Nach einer weiteren Konditionierung der Spannung und Frequenz wird der Strom dem Netz zugeführt.

**Patentansprüche**

1. Herstellung eines Monergols auf der Basis von Wasserstoffperoxid, **dadurch gekennzeichnet, dass** die zur Herstellung notwendige Energie durch Solarenergie gewonnen wird, und damit eine lokale Speicherung oder den Transport der konvertierten Sonnenenergie in Gebiete mit eingeschränkter Sonneneinstrahlung erlaubt.

2. Verfahren nach Anspruch 1, **dadurch gekennzeichnet, dass** die notwendige Energie auch von Windenergieanlagen stammt.

3. Verfahren nach Anspruch 1, **dadurch gekennzeichnet, dass** die lokale Speicherung zur Pufferung solarabhängiger Prozesse während fehlender Sonneneinstrahlung im Bereich solares Kühlen durch Absorption oder Adsorption und solarer Stromerzeugung durch den Stirling- oder Rankine-Kreisprozess verwendet wird.

4. Verfahren nach Anspruch 1, **dadurch gekennzeichnet, dass** die Energie des Monergols Wasserstoffperoxid beim Endverbraucher durch einen oder mehrere Destillationsschritte erhöht wird, wobei der Energiebedarf für die Destillation durch die Abgaswärme des bereits laufenden chemischen Prozesses gewonnen wird und somit energieautark ist.

5. Verfahren nach Anspruch 1, **dadurch gekennzeichnet, dass** die Treibgase des Monergols nach der katalytischen Zersetzung zur Energieerzeugung durch eine Entspannung in einer Turbine, durch den Betrieb eines Stirlingmotors oder durch die Verwendung eines konventionellen Gasmotors genutzt werden, wobei eine Anwendung als Fahrzeugantrieb nicht ausgeschlossen ist.

6. Verfahren nach Anspruch 1, **dadurch gekennzeichnet, dass** die Treibgase des Monergols nach der katalytischen Zersetzung zur Wärmeenergiegewinnung mit Hilfe eines Wärmetauschers genutzt werden.

7.  Verfahren nach Anspruch 1, **dadurch gekennzeichnet, dass** die Zersetzungstemperatur des hochenergetischen Monergols durch Wasserbeimengung, die vor der katalytischen Reaktion erfolgt, reduziert wird, und dadurch eine gezielte Prozesstemperatur eingehalten werden kann.

8.  Verfahren nach Anspruch 1, **dadurch gekennzeichnet**, das die Wasserstoffperoxid-Konzentration bei der energetischen Umwandlung im Gasgenerator zwischen 60% und 98% liegt.

**Bild 1**

**Bild 2**

Bild 3

Europäisches Patentamt
European Patent Office
Office européen des brevets

# EUROPÄISCHER RECHERCHENBERICHT

**Nummer der Anmeldung**

EP 11 00 2992

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | ANDO Y ET AL: "Proposal for a new system for simultaneous production of hydrogen and hydrogen peroxide by water electrolysis", INTERNATIONAL JOURNAL OF HYDROGEN ENERGY, ELSEVIER SCIENCE PUBLISHERS B.V., BARKING, GB, Bd. 29, Nr. 13, 1. Oktober 2004 (2004-10-01), Seiten 1349-1354, XP004521298, ISSN: 0360-3199, DOI: 10.1016/J.IJHYDENE.2004.02.001 | 1 | INV. C06D5/04 C01B15/01 |
| Y | * das ganze Dokument * ----- | 2-8 | |
| X | DISSELKAMP R S: "Energy storage using aqueous hydrogen peroxide", ENERGY AND FUELS JULY/AUGUST 2008 AMERICAN CHEMICAL SOCIETY US, Bd. 22, Nr. 4, Juli 2008 (2008-07), Seiten 2771-2774, XP002659677, DOI: DOI:10.1021/EF800050T | 1,2 | |
| Y | * das ganze Dokument * ----- | 2-8 | RECHERCHIERTE SACHGEBIETE (IPC) C06D C01B |
| Y | DISSELKAMP R S: "Can aqueous hydrogen peroxide be used as a stand-alone energy source?", INTERNATIONAL JOURNAL OF HYDROGEN ENERGY FEBRUARY 2010 ELSEVIER LTD GBR, Bd. 35, Nr. 3, Februar 2010 (2010-02), Seiten 1049-1053, XP002659659, DOI: DOI:10.1016/J.IJHYDENE.2009.11.073 * das ganze Dokument * ----- | 1-8 | |
| Y | EP 1 918 248 A2 (SILICON FIRE AG [CH]) 7. Mai 2008 (2008-05-07) * Ansprüche * ----- | 1-8 | |
| | -/-- | | |

Der vorliegende Recherchenbericht wurde für alle Patentansprüche erstellt

| Recherchenort | Abschlußdatum der Recherche | Prüfer |
|---|---|---|
| Den Haag | 22. September 2011 | Schut, Robert |

EPO FORM 1503 03.82 (P04C03)

**EP 2 508 498 A1**

| | Europäisches Patentamt |
| | European Patent Office |
| | Office européen des brevets |

# EUROPÄISCHER RECHERCHENBERICHT

Nummer der Anmeldung

EP 11 00 2992

| | EINSCHLÄGIGE DOKUMENTE | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| Y | US 5 228 293 A (VITALE NICHOLAS G [US]) 20. Juli 1993 (1993-07-20) * Ansprüche * ----- | 1-8 | |
| Y | US 4 103 493 A (SCHOENFELDER JAMES L) 1. August 1978 (1978-08-01) * Ansprüche * ----- | 1-8 | |
| Y | US 6 255 009 B1 (RUSEK JOHN J [US] ET AL) 3. Juli 2001 (2001-07-03) * Ansprüche * ----- | 1-8 | |
| Y | GB 1 434 765 A (CWINN S B) 5. Mai 1976 (1976-05-05) * Ansprüche * ----- | 1-8 | |
| A | US 3 898 794 A (ARIGA HAJIME) 12. August 1975 (1975-08-12) * Ansprüche * ----- | 1-8 | RECHERCHIERTE SACHGEBIETE (IPC) |
| A | US 4 047 380 A (HEFFERNAN ROBERT J) 13. September 1977 (1977-09-13) * Ansprüche * ----- | 1-8 | |

Der vorliegende Recherchenbericht wurde für alle Patentansprüche erstellt

| Recherchenort | Abschlußdatum der Recherche | Prüfer |
|---|---|---|
| Den Haag | 22. September 2011 | Schut, Robert |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.......................................................................................
& : Mitglied der gleichen Patentfamilie, übereinstimmendes Dokument

EPO FORM 1503 03.82 (P04C03)

10

**EP 2 508 498 A1**

| Im Recherchenbericht angeführtes Patentdokument | | Datum der Veröffentlichung | Mitglied(er) der Patentfamilie | | Datum der Veröffentlichung |
|---|---|---|---|---|---|
| EP 1918248 | A2 | 07-05-2008 | US | 2008102013 A1 | 01-05-2008 |
| US 5228293 | A | 20-07-1993 | KEINE | | |
| US 4103493 | A | 01-08-1978 | KEINE | | |
| US 6255009 | B1 | 03-07-2001 | KEINE | | |
| GB 1434765 | A | 05-05-1976 | CA | 1018762 A1 | 11-10-1977 |
| US 3898794 | A | 12-08-1975 | FR | 2179019 A1 | 16-11-1973 |
| | | | GB | 1417614 A | 10-12-1975 |
| US 4047380 | A | 13-09-1977 | KEINE | | |

**EP 2 508 498 A1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20090074611 A